(19) Europäisches Patentamt / European Patent Office / Office européen des brevets

(11) **EP 3 763 785 B1**

## (12) EUROPÄISCHE PATENTSCHRIFT

(45) Veröffentlichungstag und Bekanntmachung des Hinweises auf die Patenterteilung:
**12.03.2025 Patentblatt 2025/11**

(21) Anmeldenummer: **19220183.8**

(22) Anmeldetag: **31.12.2019**

(51) Internationale Patentklassifikation (IPC):
*C11C 5/00* (2006.01)  *C11C 5/02* (2006.01)
*C08L 91/08* (2006.01)  *C09J 195/00* (2006.01)

(52) Gemeinsame Patentklassifikation (CPC):
**C08L 91/08;** C08L 23/06; C08L 2205/02

---

(54) **ELEKTRONISCHE KERZE MIT MODIFIZIERTEM PARAFFINWACHS**

ELECTRONIC CANDLE WITH MODIFIED PARAFFIN WAX

BOUGIE ÉLECTRONIQUE À CIRE DE PARAFFINE MODIFIÉE

---

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.07.2019 CN 201910617182**

(43) Veröffentlichungstag der Anmeldung:
**13.01.2021 Patentblatt 2021/02**

(73) Patentinhaber: **Illich, Bernhard**
**5020 Salzburg (AT)**

(72) Erfinder: **DING, Yingqi**
**Nantong City, Jiangsu (CN)**

(74) Vertreter: **Klunker IP**
**Patentanwälte PartG mbB**
**Destouchesstraße 68**
**80796 München (DE)**

(56) Entgegenhaltungen:
WO-A1-94/13736     CN-A- 108 570 234
US-A- 2 871 210     US-B1- 6 268 401

- **ANONYMOUS: "Fischer-Tropsch Hard Waxes (Product brochure)", 1 November 2017 (2017-11-01), pages 1 - 5, XP055523707, Retrieved from the Internet <URL:http://www. sasolwax.com/fileadmin/sasolwax/documents/ Sasol_Fischer-Tropsch_Waxes_2018.pdf> [retrieved on 20181114]**

Bemerkungen:
Die Akte enthält technische Angaben, die nach dem Eingang der Anmeldung eingereicht wurden und die nicht in dieser Patentschrift enthalten sind.

---

EP 3 763 785 B1

## Beschreibung

Technisches Gebiet

Die vorliegende Erfindung betrifft das technische Gebiet der elektronischen Kerze, insbesondere die Verwendung eines modifizierten Paraffinwachses für eine elektronische Kerze, das modifizierte Paraffinwachs als solches, ein Verfahren zur Herstellung des Paraffinwachses und eine elektronische Kerze mit dem modifizierten Paraffinwachs.

Stand der Technik

Elektronische Kerzen sind sicher, umweltfreundlich, energiesparend und praktisch und werden bei immer mehr Leuten beliebt. Dabei besteht ein Trend, die herkömmlichen Kerzen durch elektronische Kerzen zu ersetzen. CN10 8570 234 A bezieht sich auf ein Wachs für elektronische Kerzen mit verbesserter Temperaturbeständigkeit. Das Wachs basiert sich auf Paraffinwachs, Polyethylenwachs und einem Polarisationsmittel.

Für das Paraffinwachs am Äußeren der bestehenden elektronischen Kerzen wird derzeit ein gewöhnliches standardisiertes raffiniertes Paraffinwachs verwendet, welches einen Temperaturbeständigkeitsbereich von -5~60°C und eine niedrigere Festigkeit aufweist. Bei einer Verwendung in Gebieten mit höherer Temperatur kommt es zum Schmelzen, womit die Verwendung unmöglich wird; bei einer Verwendung in Gebieten mit niedrigerer Temperatur passiert es, dass das Paraffinwachs hart und spröde wird, sodass beim Pressen oder bei Erschütterung ein Problem mit Brechen oder Verformen auftritt.

Die Erfindung

Die vorliegende Erfindung zielt darauf ab, die Mängel aus dem Stand der Technik zu überwinden und ein modifiziertes Paraffinwachs für eine elektronische Kerze sowie eine entsprechende elektronische Kerze zur Verfügung zu stellen, mit denen der Temperaturbeständigkeitsbereich vergrößert und die Festigkeit verbessert wird, womit der Einsatzbereich erweitert wird.

Um das obige Ziel zu erreichen, verwendet die vorliegende Erfindung die folgende technische Lösung: ein modifiziertes Paraffinwachs für eine elektronische Kerze, umfassend ein zubereitetes Wachs, ein raffiniertes Fischer-Tropsch-Wachs, Hartwachs bestehend aus einem Paraffinanteil von > 96% und einem Polyethylenanteil von < 4% (K512), und ein Polyethylenwachs als Zusatzstoff, wobei die jeweiligen Zusammensetzungen einen prozentualen Gehalt wie folgt aufweisen: das zubereitete Wachs 40-50%, das raffinierte Fischer-Tropsch-Wachs 35~45%, K512 8~12% und der Zusatzstoff 4~6%.

Bevorzugt umfasst das Paraffinwachs ein mikrokristallines Wachs, welches einen prozentualen Gehalt von 2~5% aufweist.

Bevorzugt hat das zubereitete Wachs die Modellnummer von TUDACOAT 1001 (moduliertes Wachs), welches eine Trophschmelztemperatur von knapp 100°C und einen Nadeldurchdringfestigkeitswert von 11 $mm$ bei 25°C gemäß ASTM D 1321 (2004-01) besitzt.

Ein Verfahren zum Herstellen des modifizierten Paraffinwachses für eine elektronische Kerze umfasst die folgenden Schritte:

    a. Separates Erhitzen und Schmelzen des zubereiteten Wachses, des raffinierten Fischer-Tropsch-Wachses und des Polyethylenwachses, anschließendes Mischen und Rühren, um ein gemischtes Wachs zu bilden;
    b. Zugeben des Hartwachses in das gemischte Wachs, anschließendes Rühren, um ein modifiziertes Paraffinwachs zu bilden;
    c. Eingießen des modifizierten Paraffinwachses in ein Formwerkzeug für die elektronische Kerze
    d. Abkühlen bei einer Temperatur von 5~35°C
    e. Entformen und somit Bilden der elektronischen Kerze.

Im Vergleich zum Stand der Technik hat das modifizierte Paraffinwachs für eine elektronische Kerze gemäß der vorliegenden Erfindung die folgenden Vorteile: das zubereitete Wachs und das raffinierte Fischer-Tropsch-Wachs werden als Rohstoffe verwendet. Dadurch kann ein Schmelzpunkt von 120°C sichergestellt werden. Zugleich wird das Hartwachs zugegeben, um den Festigkeitswert zu erhöhen. Durch Zugabe des Polyethylenwachses wird mittels seiner Kältebeständigkeit das Niedertemperaturverhalten des Paraffinwachses verbessert. Mit den Zusammensetzungen kann ein Temperaturbeständigkeitsbereich des Paraffinwachses von -30-120°C erreicht werden.

Ausführungsbeispiele für das modifizierte Paraffinwachs

Im Zusammenhang mit dem Inhalt der vorliegenden Erfindung werden die technischen Lösungen in den Ausführungsformen des modifizierten Paraffinwachses im Folgenden klar und vollständig erläutert.

Ein modifiziertes Paraffinwachs für eine elektronische Kerze gemäß der vorliegenden Erfindung umfasst ein zubereitetes Wachs, ein raffiniertes Fischer-Tropsch-Wachs, ein Hartwachs und einen Zusatzstoff, wobei die jeweiligen Zusammensetzungen einen prozentualen Gehalt wie folgt aufweisen: das zubereitete Wachs 40~50%, das raffinierte Fischer-Tropsch-Wachs 35~45%, Hartwachs 8~12% und der Zusatzstoff 4~6%.

Für das zubereitete Wachs wird vorzugsweise ein zubereitetes Wachs (Englisch: "Blending Wax") von Hansen&Rosenthal mit der Modellnummer von TUDACOAT 1001 verwendet, welches einen hohen Schmelzpunkt von knapp 100°C und eine gute Stabilität mit einem Nadeldurchdringfestigkeitswert von 11 $\frac{mm}{10}$ bei 25°C gemäß ASTM D 1321 (2004-01) aufweist; das raffinierte Fischer-Tropsch-Wachs wird durch die Firma Sentaiyuan hergestellt; und K512 als Hartwachs wird durch die Firma PLOYETHYLENE aus Korea hergestellt, wodurch die Festigkeit des Paraffinwachses wirksam verbessert wird; der Zusatzstoff ist ein Polyethylenwachs.

Um den Festigkeitswert bei niedriger Temperatur zu erhöhen, kann weiterhin eine kleine Menge an mikrokristallinem Wachs bei der Verwendung zugegeben werden, welches einen prozentualen Gehalt von 2~5% hat.

Ein Verfahren zum Herstellen des modifizierten Paraffinwachses für eine elektronische Kerze gemäß der vorliegenden Erfindung umfasst die folgenden Schritte:

a. Separates Erhitzen und Schmelzen des zubereiteten Wachses, des raffinierten Fischer-Tropsch-Wachses und des Polyethylenwachses, anschließendes Mischen und Rühren, um ein gemischtes Wachs zu bilden;

b. Zugeben des Hartwachses in das gemischte Wachs, anschließendes Rühren, um ein modifiziertes Paraffinwachs zu bilden;

c. Eingießen des modifizierten Paraffinwachses in ein Formwerkzeug für die elektronische Kerze;

d. Abkühlen bei einer Temperatur von 5~35°C;

e. Entformen und somit Bilden der elektronischen Kerze.

Im Zusammenhang mit mehreren Ausführungsbeispielen wird die vorliegende Erfindung im Folgenden näher erläutert:

Ausführungsbeispiel 1

Ein modifiziertes Paraffinwachs für eine elektronische Kerze gemäß der vorliegenden Erfindung, umfassend ein zubereitetes Wachs, ein raffiniertes Fischer-Tropsch-Wachs, ein Hartwachs (K512) und einen Zusatzstoff, wobei die jeweiligen Zusammensetzungen einen prozentualen Gehalt wie folgt aufweisen: das zubereitete Wachs 45%, das raffinierte Fischer-Tropsch-Wachs 40%, K512 10% und das Polyethylenwachs 5%.

Ausführungsbeispiel 2

Ein modifiziertes Paraffinwachs für eine elektronische Kerze gemäß der vorliegenden Erfindung, umfassend ein zubereitetes Wachs, ein raffiniertes Fischer-Tropsch-Wachs, ein Hartwachs (K512) und einen Zusatzstoff, wobei die jeweiligen Zusammensetzungen einen prozentualen Gehalt wie folgt aufweisen: das zubereitete Wachs 40%, das raffinierte Fischer-Tropsch-Wachs 45%, K512 9% und das Polyethylenwachs 6%.

Ausführungsbeispiel 3

Ein modifiziertes Paraffinwachs für eine elektronische Kerze gemäß der vorliegenden Erfindung, umfassend ein zubereitetes Wachs, ein raffiniertes Fischer-Tropsch-Wachs, ein Hartwachs (K512), ein mikrokristallines Wachs und einen Zusatzstoff, wobei die jeweiligen Zusammensetzungen einen prozentualen Gehalt wie folgt aufweisen: das zubereitete Wachs 42%, das raffinierte Fischer-Tropsch-Wachs 43%, K512 8% und das mikrokristalline Wachs 3% und das Polyethylenwachs 4%.

Ausführungsbeispiel 4

Ein modifiziertes Paraffinwachs für eine elektronische Kerze gemäß der vorliegenden Erfindung, umfassend ein zubereitetes Wachs, ein raffiniertes Fischer-Tropsch-Wachs, ein Hartwachs (K512), ein mikrokristallines Wachs und einen Zusatzstoff, wobei die jeweiligen Zusammensetzungen einen prozentualen Gehalt wie folgt aufweisen: das zubereitete Wachs 48%, das raffinierte Fischer-Tropsch-Wachs 38%, K512 8% und das mikrokristalline Wachs 2% und das Polyethylenwachs 4%.

Die technischen Inhalte und die technischen Merkmale der vorliegenden Erfindung zeigen, dass auf den Anweisungen und Beschreibungen der vorliegenden Erfindung basierend verschiedene Variationen und Modifikationen ohne Abweichung von dem Wesen der vorliegenden Erfindung möglich sind. Aufgrund dessen ist der Schutzumfang der vorliegenden Erfindung nicht auf den beschriebenen Inhalt der Ausführungsbeispiele beschränkt, sondern soll verschiedenen Variationen und Modifikationen ohne Abweichung von der vorliegenden Erfindung umfassen, soweit diese von den Patentansprüchen umfasst sind.

**Patentansprüche**

1. Modifiziertes Paraffinwachs für eine elektronische Kerze, **dadurch gekennzeichnet, dass** es ein zubereitetes Wachs, ein raffiniertes Fischer-Tropsch-Wachs, K512 und einen Zusatzstoff umfasst, wobei die jeweiligen Zusammensetzungen einen prozentualen Gehalt wie folgt aufweisen: das zubereitete Wachs 40~50%, das raffinierte Fischer-Tropsch-Wachs 35~45%, K512 8~12% und der Zusatzstoff 4~6%.

2. Modifiziertes Paraffinwachs für eine elektronische Kerze nach Anspruch 1, **dadurch gekennzeichnet, dass** der Zusatzstoff ein Polyethylenwachs ist.

3. Modifiziertes Paraffinwachs für eine elektronische Kerze nach Anspruch 1 oder 2, **dadurch gekennzeichnet, dass** es weiterhin ein mikrokristallines Wachs umfasst, welches einen prozentualen Gehalt von 2~5% aufweist.

4. Modifiziertes Paraffinwachs für eine elektronische Kerze nach Anspruch 1, 2 oder 3 **dadurch gekennzeichnet, dass** das zubereitete Wachs die Modellnummer von TUDACOAT 1001 hat.

5. Verfahren zum Herstellen des modifizierten Paraffinwachses für eine elektronische Kerze nach einem der Ansprüche 1-4, umfassend die folgenden Schritte:

> a. Separates Erhitzen und Schmelzen des zubereiteten Wachses, des raffinierten Fischer-Tropsch-Wachses und des Zusatzstoffes, anschließendes Mischen und Rühren, um ein gemischtes Wachs zu bilden;
> b. Zugeben von K512 in das gemischte Wachs, anschließendes Rühren, um ein modifiziertes Paraffinwachs zu bilden;
> c. Eingießen des modifizierten Paraffinwachses in ein Formwerkzeug für die elektronische Kerze,
> d. Abkühlen bei einer Temperatur von 5~35°C
> e. Entformen und somit Bilden der elektronischen Kerze.

6. Verwendung eines modifizierten Paraffinwachses für eine elektronische Kerze, **dadurch gekennzeichnet, dass** es ein zubereitetes Wachs, ein raffiniertes Fischer-Tropsch-Wachs, K512 und einen Zusatzstoff umfasst, wobei die jeweiligen Zusammensetzungen einen prozentualen Gehalt wie folgt aufweisen: das zubereitete Wachs 40~50%, das raffinierte Fischer-Tropsch-Wachs 35~45%, K512 8~12% und der Zusatzstoff 4~6%.

7. Verwendung eines modifizierten Paraffinwachses für eine elektronische Kerze nach Anspruch 6, **dadurch gekennzeichnet, dass** der Zusatzstoff ein Polyethylenwachs ist.

8. Verwendung eines modifizierten Paraffinwachses für eine elektronische Kerze nach Anspruch 6 oder 7, **dadurch gekennzeichnet, dass** es weiterhin ein mikrokristallines Wachs umfasst, welches einen prozentualen Gehalt von 2~5% aufweist.

9. Verwendung eines modifizierten Paraffinwachses für eine elektronische Kerze nach Anspruch 6, 7 oder 8 **dadurch gekennzeichnet, dass** das zubereitete Wachs die Modellnummer von TUDACOAT 1001 hat.

10. Elektronische Kerze umfassend ein modifiziertes Paraffinwachs, welches ein zubereitetes Wachs, ein raffiniertes Fischer-Tropsch-Wachs, K512 und einen Zusatzstoff umfasst, wobei die jeweiligen Zusammensetzungen einen prozentualen Gehalt wie folgt aufweisen: das zubereitete Wachs 40~50%, das raffinierte Fischer-Tropsch-Wachs 35~45%, K512 8~12% und der Zusatzstoff 4~6%.

11. Elektronische Kerze nach Anspruch 10, wobei der Zusatzstoff ein Polyethylenwachs ist.

12. Elektronische Kerze nach Anspruch 10 oder 11, wobei es weiterhin ein mikrokristallines Wachs umfasst, welches einen prozentualen Gehalt von 2~5% aufweist.

13. Elektronische Kerze nach Anspruch 10, 11 oder 12, **dadurch gekennzeichnet dass** das zubereitete Wachs die Modellnummer von TUDACOAT 1001 hat.

**Claims**

1. A modified paraffin wax for an electronic candle, **characterized in that** it comprises a prepared wax, a refined Fischer-Tropsch wax, K512 and an additive, wherein the respective compositions have a percentage proportion as follows: the prepared wax 40 - 50%, the refined Fischer-Tropsch wax 35 - 45%, K512 8 - 12% and the additive 4 - 6%.

2. The modified paraffin wax for an electronic candle according to claim 1, **characterized in that** the additive is a polyethylene wax.

3. The modified paraffin wax for an electronic candle according to claim 1, **characterized in that** it further comprises a micro-crystalline wax having a percentage proportion of 2 - 5%.

4. The modified paraffin wax for an electronic candle according to claim 1, **characterized in that** the prepared wax has the model number of TUDACOAT 1001.

5. A method for manufacturing the modified paraffin wax for an electronic candle according to any of claims 1 - 4, comprising the following steps of:

> a. separate heating and melting of the prepared wax, the refined Fischer-Tropsch wax and the additive, subsequent mixing and stirring to form a mixed wax;
> b. adding K512 to the mixed wax, subsequent stirring to form a modified paraffin wax;
> c. casting the modified paraffin wax into a molding tool for the electronic candle,
> d. cooling at a temperature of 5 ~ 35°C,
> e. removing from mold and thus forming the electronic candle.

6. Use of a modified paraffin wax for an electronic candle, **characterized in that** it comprises a prepared wax, a refined Fischer-Tropsch wax, K512 and an additive, wherein the respective compositions have a percentage proportion as follows: the prepared wax 40 - 50%, the refined Fischer-Tropsch wax 35 - 45%, K512 8 - 12% and the additive 4 - 6%.

7. Use of a modified paraffin wax for an electronic candle according to claim 6, **characterized in that** the additive is a polyethylene wax.

8. Use of a modified paraffin wax for an electronic candle according to claim 6 or 7, **characterized in that** it further comprises a micro-crystalline wax having a percentage proportion of 2 - 5%.

9. Use of a modified paraffin wax for an electronic candle according to claim 6, 7 or 8, **characterized in that** the prepared wax has the model number of TUDACOAT 1001.

10. An electronic candle comprising a modified paraffin wax, which comprises a prepared wax, a refined Fischer-Tropsch wax, K512 and an additive, wherein the respective compositions have a percentage proportion as follows: the prepared wax 40 - 50%, the refined Fischer-Tropsch wax 35 - 45%, K512 8 - 12% and the additive 4 - 6%.

11. The electronic candle according to claim 10, wherein the additive is a polyethylene wax.

12. The electronic candle according to claim 10 or 11, wherein it further contains a micro-crystalline wax having a percentage proportion of 2 - 5%.

13. The electronic candle according to claim 10, 11 or 12, **characterized in that** the prepared wax has the model number of TUDACOAT 1001.

**Revendications**

1. Cire de paraffine modifiée pour une bougie électronique, **caractérisée en ce qu'**elle comprend une cire préparée, une cire de Fischer-Tropsch raffinée, du K512 et un additif, cependant que les compositions respectives ont une teneur en pourcentage telle qu'il suit : la cire préparée 40~50%, la cire de Fischer-Tropsch raffinée 35~45%, K512 8~12% et l'additif 4~6%.

2. Cire de paraffine modifiée pour une bougie électronique selon la revendication 1, **caractérisée en ce que** l'additif est une cire de polyéthylène.

3. Cire de paraffine modifiée pour une bougie électronique selon la revendication 1 ou 2, **caractérisée en ce qu'**elle comprend en outre une cire microcristalline qui a une teneur en pourcentage s'élevant à 2~5%.

4. Cire de paraffine modifiée pour une bougie électronique selon la revendication 1, 2 ou 3, **caractérisée en ce que** la cire préparée a le numéro de modèle de TUDACOAT 1001.

5. Procédé de fabrication de la cire de paraffine modifiée pour une bougie électronique selon une des revendications 1-4, comprenant les étapes suivantes :

    a. Chauffer séparément et faire fondre la cire préparée, la cire de Fischer-Tropsch raffinée et l'additif, mélanger et remuer ensuite afin de constituer une cire mélangée ;
    b. Ajouter du K512 dans la cire mélangée, remuer ensuite afin de constituer une cire de paraffine modifiée ;
    c. Verser la cire de paraffine modifiée dans un outil de moulage pour la bougie électronique,
    d. Refroidir à une température de 5-35C.
    e. Démouler et constituer ainsi la bougie électronique.

6. Utilisation d'une cire de paraffine modifiée pour une bougie électronique, **caractérisée en ce qu'**elle comprend une cire préparée, une cire de Fischer-Tropsch raffinée, du K512 et un additif, cependant que les compositions respectives ont une teneur en pourcentage telle qu'il suit : la cire préparée 40~50%, la cire de Fischer-Tropsch raffinée 35~45%, le K512 8~12% et l'additif 4~6%.

7. Utilisation d'une cire de paraffine modifiée pour une bougie électronique selon la revendication 6, **caractérisée en ce que** l'additif est une cire de polyéthylène.

8. Utilisation d'une cire de paraffine modifiée pour une bougie électronique selon la revendication 6 ou 7 , **caractérisée en ce qu'**elle comporte en outre une cire microcristalline qui a une teneur en pourcentage s'élevant à 2~5%.

9. Utilisation d'une cire de paraffine modifiée pour une bougie électronique selon la revendication 6, 7 ou 8, **caractérisée en ce que** la cire préparée a le numéro de modèle de TUDACOAT 1001.

10. Bougie électronique comprenant une cire de paraffine modifiée qui comprend une cire préparée, une cire de Fischer-Tropsch raffinée, du K512 et un additif, cependant que les compositions respectives ont une teneur en pourcentage telle qu'il suit : la cire préparée 40~50%, la cire de Fischer-Tropsch raffinée 35~45%, le K512 8~12% et l'additif 4~6%.

11. Bougie électronique selon la revendication 10, cependant que l'additif est une cire de polyéthylène.

12. Bougie électronique selon la revendication 10 ou 11, cependant qu'elle comporte en outre une cire microcristalline qui a une teneur en pourcentage s'élevant à 2~5%.

13. Bougie électronique selon la revendication 10, 11 ou 12, **caractérisée en ce que** la cire préparée a le numéro de modèle de TUDACOAT 1001.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 108570234 A